# EUROPÄISCHE PATENTSCHRIFT

(11) **EP 1 214 862 B1**
(45) Veröffentlichungstag und Bekanntmachung des Hinweises auf die Patenterteilung: **18.05.2011**
(21) Anmeldenummer: 00975758.4
(22) Anmeldetag: 14.09.2000
(51) Int. Cl.: H04Q 11/04

(54) **KOMMUNIKATIONSSYSTEM**
COMMUNICATION SYSTEM
SYSTEME DE COMMUNICATION

(30) Priorität: 21.09.1999 DE 19945154
(43) Veröffentlichungstag der Anmeldung: 19.06.2002
(73) Patentinhaber: Siemens Enterprise Communications GmbH & Co. KG, 81379 München (DE)
(72) Erfinder: WINKLER, Steffi, Lissi, 82131 Gauting (DE); EMMERINK, Antonius, 81671 München (DE); KLEIN, Egon, Franz, 82110 Germering (DE); WINDECKER, Rainer, 81739 München (DE); STEFFAN, Andreas, 81477 München (DE)
(74) Vertreter: Fritzsche, Thomas
(86) Internationale Anmeldenummer: PCT/DE2000/003207
(87) Internationale Veröffentlichungsnummer: WO 2001/022769

(56) Entgegenhaltungen:
- EP-A- 0 335 555
- EP-A- 0 939 576
- WO-A-97/16007

## Beschreibung

Die Erfindung bezieht sich auf ein Verfahren und eine Anordnung zum Auf- und Abbau, bzw. Unterhalt von Kommunikationsverbindungen, insbesondere im Rahmen einer privaten Nebenstellenanlage und zu verbindender Endgeräte.

Wegen des steigenden Kommunikationsaufkommens bedingt durch zunehmende Anzahl der Kommunikationsteilnehmer, sowie durch steigende Anforderungen an die Menge der zu übertragenden Daten, werden an Vermittlungseinrichtungen, insbesondere an privaten Nebenstellenanlagen immer höhere Anforderungen hinsichtlich der Menge der zu übertragenden Daten je Kommunikationsverbindung und der Anzahl der miteinander verbindbaren Kommunikationsendgeräte gestellt.

Aktuelle Einrichtungen basieren beispielsweise auf dem TDM-Verfahren (Time Division Multiplexing) bei dem Kommunikationsdaten unterschiedlicher Verbindungen in jeweils definierten Zeitschlitzen übertragen werden. Eine Verbindung unterschiedlicher Kommunikationspartner wird durch ein Koppelfeld hergestellt, welches gemäß einer Steuerinformation eingehende Zeitschlitze auf einer eingehenden Verbindung ausgehende Zeitschlitze einer ausgehenden Verbindung zuordnet. Solche Koppelfelder sind in der Regel fest dimensioniert und können lediglich eine definierte Anzahl von Verbindungen herstellen, was oft eine bedarfsgerechte Anpassung von Vermittlungsanlagen erschwert. Ein weiteres Problem solcher Einrichtungen besteht darin, daß die Zeitschlitze eine begrenzte Aufnahmefähigkeit für Daten aufweisen.

Wegen unterschiedlicher Stärken und Schwächen von Netzen beim Transport von Sprachen und Daten im lokalen Bereich haben sich verschiedene Kommunikationsnetze für spezielle Einsatzzwecke etabliert.

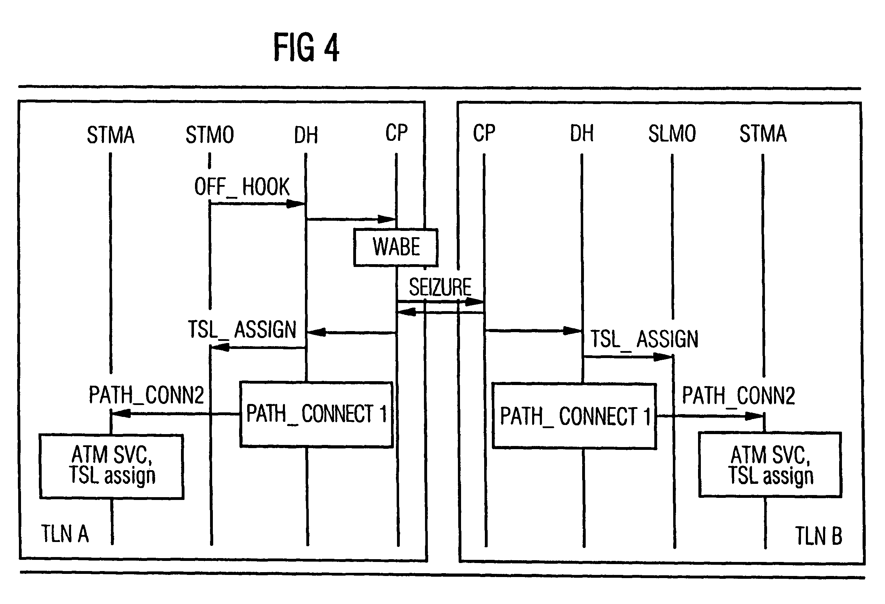

In der Druckschrift "The Lucent Technologies Softswitch-Realizing the Promise of Convergence, Ramnath A. Laksami-Ratan, Bell Labs Technical Journal, April-June 1999, Seiten 174-195" ist für den Einsatz in einem öffentlichen Netz (Carrier-Netz) der Übergang von einer traditionellen TDM- Vermittlungsanlage zu einem Softswitch offenbart (Seite 180, Fig. 4) . TDM-linecards zum Anschluss der Teilnehmer und anderer Netzträger werden durch access- und trunking-Gateways ersetzt, die zentral vom Softswitch gesteuert werden, wobei das Koppelfeld (Fig. 4: "Time slot interchange") entfällt. An seine Stelle tritt ein Paketnetz (IP/ATM backbone) zum Austausch und zur Vermittlung der Mediendaten (Seite 180, linke Spalte, letzter Absatz bis rechte Spalte, erster Absatz).

Die der Erfindung zugrunde liegende Aufgabe besteht darin, ein Verfahren und eine Anordnung zur Bereitstellung einer Kommunikationsverbindung anzugeben, welche ein hohes Maß an Flexibilität hinsichtlich der Anpassung an Netzinfrastrukturen sowie deren räumlicher Ausdehnung gewährleisten, die Ressourcen des Netzes schonen und die Kommunikationswege kurz halten. Diese Aufgabe wird für das Verfahren gemäß den Merkmalen des Patentanspruches 1 und für die Anordnung gemäß den Merkmalen des Patentanspruches 11 gelöst. Weiterbildungen der Erfindung ergeben sich aus den abhängigen Ansprüchen.

Besonders vorteilhaft wird beim erfindungsgemäßen Verfahren der Betrieb eines heterogenen Kommunikationsnetzes unter Verwendung einer gemeinsamen Steuerung möglich, weil im Bereich der zentralen Steuerung, bzw. im Transportnetz, Informationen über die Protokollart vorhanden sind, mit denen der jeweilige Teilnehmer erreichbar sind. Vorteilhaft kann die Topologie des Transportnetzes dabei von der des Steuerungsnetzes abweichen. Auf diese Weise ist es möglich, unter Vermeidung von vielfältigen Umsetzvorgängen, die auf einem vorab festgelegten Weg zwischen den Teilnehmern erforderlich wären, eine Kommunikationsverbindung herzustellen. Vorteilhaft wird dabei berücksichtigt, daß sie mit Hilfe unterschiedlicher Kommunikationsprotokolle kommunizieren, wobei es eine dezentrale Anpassung an das erforderliche Kommunikationsprotokoll im Gegensatz zu einer zentralen Anpassung ermöglicht, den Kommunikationsweg über eine minimale Anzahl von Umsetzeinrichtungen zu legen, wodurch die Ressourcen des Netzes geschont werden, und die Kommunikationswege im Transportnetz kurz gehalten werden.

Besonders vorteilhaft wird bei einer Weiterbildung des beschriebenen Verfahrens zusätzlich zur Protokollinformation noch eine das Transportnetz betreffende Medieninformation bereitgehalten, weil auf diese Weise die Eigenschaft unterschiedlicher übertragungsmedien bezüglich Transportqualität, Auslastung und Geschwindigkeit bei der Steuerung des Verbindungsaufbaus berücksichtigt werden kann.

Besonders vorteilhaft kann bei einer Weiterbildung des beschriebenen Verfahrens der unterschiedliche Protokollaufbau von Kommunikationsprotokollen, die auf einem einzigen Medium oder verschiedenen Medien abgehandelt werden, berücksichtigt werden, indem passende Protokollumsetzungseinheiten beteiligter Kommunikationsteilnehmer beim Aufbau bzw. Unterhalt der Verbindung entsprechend definiert angesteuert werden.

Besonders vorteilhaft kann bei einer Weiterbildung des beschriebenen Verfahrens eine definierte Medienzugangseinrichtung für einen bestimmten Kommunikationsteilnehmer angesteuert werden. Auf diese Weise können vorteilhaft, falls mehrere Transportmedien je Kommunikationsteilnehmer verfügbar sind diese bei einem Verbindungsaufbau gezielt berücksichtigt und angesteuert werden.

Besonders vorteilhaft können bei einer Weiterbildung des beschriebenen Verfahrens die benötigten Informationen zur Steuerung des Transportnetzes zentral eingerichtet und/oder bereitgehalten werden, weil sich dann das Problem der Aktualisierung, Pflege und Sicherung dieser Daten auf die Pflege einer zentralen Datenbasis beschränkt.

Vorteilhaft besteht die Möglichkeit bei einer Weiterbildung des beschriebenen Verfahrens benötigte Steuerungsinformationen im Transportnetz dezentral bereitzuhalten und für den Fall eines Verbindungsaufbaus von der Steuerung aus abzufragen, weil auf diese Weise die Möglichkeit besteht, daß dezentral Maßnahmen zur Anpassung des Transportnetzes vorgenommen werden können, ohne daß von derartigen Maßnahmen das gesamte Transportnetz und eine zentrale Steuerung betroffen werden.

Vorteilhaft wird bei einer Weiterbildung des beschriebenen Verfahrens, bei dem als Transportnetz ein Netz vorgesehen ist, auf den nach dem Internetprotokoll übertragen wird, zur Steuerung einer dezentralen Einrichtung einer IP-Adresse genau ein Teilnehmeranschluß eines PCM-Datenstroms und eine gesamte dezentrale Einrichtung zugeordnet, weil auf diese Art und Weise die Verwaltung und Steuerung von IP-Teilnehmern unter Verwendung von Steuerungen möglich ist, die ebenfalls TDM-basierende Kommunikationseinrichtungen ansteuern, ohne daß zusätzlich ein hoher Entwicklungsaufwand zur Anpassung dieser Einrichtungen an IP-basierende Endgeräte erforderlich ist. Das ermöglicht es, existierende herkömmliche Telefonanlagen auch beispielsweise für IP Telefonie zu nutzen, wobei herkömmliche Telefonanlagen eine große Menge an Leistungsmerkmalen zur Verfügung stellen, oder auch Datenverbindungen mit einer Telefonanlage zu steuern und so mit Leistungsmerkmalen anzureichern.

Ein großer Vorteil einer Weiterbildung des beschriebenen Verfahrens besteht darin, daß durch die Herstellung einer direkten Verbindung zwischen Kommunikationsendgeräten transportnetzspezifische Einrichtungen, wie die dezentralen Vermittlungseinrichtungen und die benötigten Umsetzeinrichtungen für die sonst erforderliche Datenkonvertierung, entlastet werden. Auf diese Weise kann eine Leistungssteigerung des Transportnetzes erzielt werden.

Besonders vorteilhaft weist eine Anordnung zum Auf-/Abbau und/oder Unterhalt einer Kommunikationsverbindung Mittel auf, die mindestens zwei Steuerungsinformationen an zwei dezentrale Einrichtungen des Transportnetzes abgeben, falls mindestens eine Teilverbindung zwischen diesen dezentralen Einrichtungen betroffen ist, weil auf diese Weise eine Konfiguration zur Steuerung heterogener Transportnetze zur Verfügung gestellt wird, bei der Verbindungsinformationen, die zur Steuerung von TDM- Verbindungen geeignet ist, zusammen mit der benötigten Protokollinformation an die vom Verbindungsauf-/Abbau und/oder Unterhalt betroffenen dezentralen Einrichtungen übertragen wird. Besonders vorteilhaft wird bei einer derartigen Anordnung ebenfalls der Betrieb einer gemischten Infrastruktur aus TDM-basierenden Vermittlungseinrichtungen und IP-basierenden lokalen Netzen ermöglicht.

Besonders vorteilhaft weist eine Weiterbildung einer derartigen Anordnung eine zentrale Steuerungseinrichtung auf, welche transportnetzspezifische Medien- oder Protokollinformationen bereit hält und beim Verbindungsaufbau zur Verfügung stellt. Auf diese Weise wird in Verbindung mit einer bestehenden TDM-basierenden Kommunikationsinfrastruktur sichergestellt, daß die vorhandene zentrale Datenbasis, ggf. Leistungsmerkmalrealisierung und Applikationsschnittstelle weiter genutzt werden kann und lediglich um die protokoll- und medienspezifischen Informationen zum Betrieb gemischter Infrastrukturen erweitert werden muß.

Eine dezentrale Bereitstellung der benötigten ergänzenden Steuerungsinformationen hat gegenüber der zentralen Lösung den Vorteil, daß bei Konfigurationsänderungen lediglich lokale Bereiche dezentraler Einrichtungen betroffen sind und nicht das gesamte Transportnetz, so daß eine flexiblere Einrichtung entsteht, bei der lediglich im Verbindungsaufbaufall der jeweilige aktuelle Steuerungsinformationsbestand von der zentralen Steuerung des Transportnetzes für den Verbindungsaufbau abgefragt wird.

Vorteilhaft weist eine Weiterbildung der beschriebenen Anordnung ein Gateway zur Umsetzung eines TDM-Protokolles in das Internetprotokoll auf, weil durch ein derartiges Gateway TDM-basierende Geräte an ein Transportnetz angeschlossen werden können, auf dem das Internet-Protokoll abgehandelt wird.

Vorteilhaft weist eine Weiterbildung der beschriebenen Anordnung eine Überprüfungseinrichtung auf zur Überprüfung von protoköllspezifischen Informationen mit Hinblick auf die Adresse einer dezentralen Einrichtung, weil auf diese Art und Weise sichergestellt werden kann, daß für Kommunikationsverbindungen zwischen Kommunikationsendgeräten einer einzigen dezentralen Einrichtung ein Umsetzvorgang der Kommunikationsdaten in transportnetzspezifische Kommunikationsdaten unterbleiben kann. Vorteilhaft tritt deswegen keine Verzögerung durch die Umsetzung und kein Datenverlust durch eventuell nichtverlustfreie Wandlungsverfahren auf.

Vorteilhaft weist eine Weiterbildung der beschriebenen Anordnung einen Mechanismus auf, der einen Kurzschluß innerhalb eines TDM-Datenstromes zwischen zwei zu verbindenden Teilnehmern herstellen kann, weil auf diese Weise interne Kommunikationsverbindungen technisch elegant ohne Verwendung der dezentralen Vermittlungseinrichtung und der Umsetzeinrichtung hergestellt werden können.

Vorteilhaft erfolgt der Aufbau einer internen Verbindung, bei einer Weiterbildung der beschriebenen Anordnung durch Vertauschung der Schreib- und Leserichtung von Zeitschlitzen eines TDM-Datenstromes, weil so eine Kommunikationsverbindung innerhalb einer dezentralen Einrichtung auf technisch einfachste Art und Weise realisiert werden kann.

Vorteilhaft weist eine Weiterbildung der beschriebenen Anordnung einen Ethernet-Anschluß auf, weil durch einen derartigen Netzwerkanschluß der Zugang eines Endgerätes an das Ethernet ermöglicht wird. Derartige Netzwerkanschlußkarten sind am Markt verfügbar und stellen eine einfache und kostengünstige Lösung dar, um gemischte Transportnetze mit Teilverbindungen über das Ethernet zu realisieren.

Besonders vorteilhaft sind alle Einrichtungen, die für einen heterogenen Netzbetrieb in dezentralen Einrichtungen vorgesehen sind, in spezifischen Endgeräten integriert, weil sich ein derartiges Endgerät durch eine bisher übliche TDM-basierende Steuerung unter gerätespezifischer Festlegung eines einzigen TDM-Datenstromes in Verbindung mit einem einzigen Teilnehmeranschluß und einer Teilnehmeranschlußbaugruppe ohne großen Aufwand für die Anpassung mit bisher üblichen Steuerungen steuern läßt.

Besonders vorteilhaft sind bei einer Weiterbildung derartiger Anordnungen als Endgeräte Telefone und Personalcomputer vorgesehen, weil dies die am häufigsten gebräuchlichen Endgeräte sind und ein Direktanschluß dieser Geräte für Sprachkommunikation an das Ethernet einen hohen Zusatznutzen für Endgeräteanwender darstellt, wenn sie durch eine Zentrale Steuerung in Verbindung mit herkömmlichen Einrichtungen betrieben werden können.

Im folgenden werden Ausführungsbeispiele der Erfindung anhand von Figuren weiter erläutert.
Figur 1 zeigt eine herkömmliche Kommunikationsanordnung,
Figur 2 zeigt ein Beispiel einer neuen Kommunikationsanordnung,
Figur 3 zeigt ein Beispiel eines Meldungsablaufs bei einem bekannten Vermittlungssystem.
Figur 4 zeigt ein Beispiel eines Meldungsablaufs unter Verwendung zeitschlitzbezogener Verbindungsinformationen für das Transportnetz.
Figur 5 zeigt eine Kommunikationsinfrastruktur, bei der auf Teilverbindungsstrecken unterschiedliche Kommunikationsprotokolle eingesetzt werden.
Figur 6 zeigt eine Kommunikationsinfrastruktur unter Verwendung IP-basierender Endgeräte.
Figur 7 zeigt ein weiteres Ausführungsbeispiel.

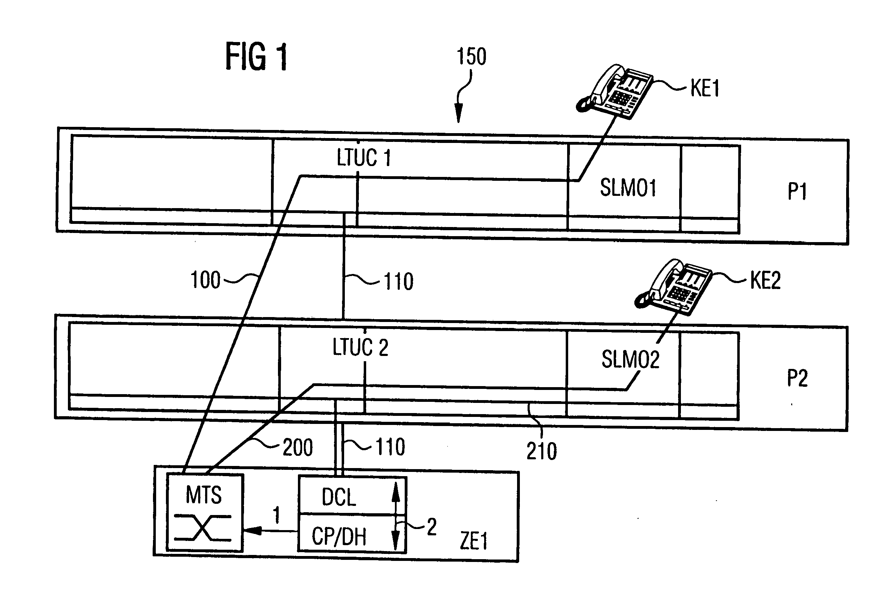

Figur 1 zeigt ein Beispiel einer bekannten Nebenstellenanlage 150 mit zwei peripheren Einrichtungen P1 und P2, an welche jeweils ein digital oder analog arbeitendes Kommunikationsendgerät KE1 und KE2 angeschlossen ist. Diese peripheren Einrichtungen P1 und P2 sind im gleichen räumlichen Bereich wie die zentrale Einrichtung ZE1 untergebracht. Beispielsweise befinden sie sich im selben Raum oder im selben Kabinett mit ihr. Die Endgeräte belegen definierte Zeitschlitze eines PCM-Datenstromes (Pulse Code Modulation) mit Kommunikationsdaten. Die digitalen oder analogen Kommunikationsendgeräte KE1 und KE2 sind jeweils an Anschlußbaugruppen SLMO1 und SLMO2 angeschlossen, welche dem PCM-Datenstrom digitale Daten, die für die jeweiligen Endgeräte bestimmt sind, bzw. von den jeweiligen Endgeräten ausgehen, über per Signalisierung festgelegte Zeitschlitze zuführen, bzw. entnehmen. Diese PCM-Datenströme sind in Figur 1 mit 100 bzw. 200 bezeichnet. Weiterhin sind Signalisierungsverbindungen dargestellt, welche mit 110 bzw. 210 dargestellt sind. Es ist zu beachten, daß es sich hierbei lediglich um eine logische Darstellung und nicht um eine physikalische Darstellung handelt. In Wirklichkeit werden jedoch die Transportdaten und die Signalisierungdaten im gleichen Verbindungskabel übertragen.

Weiterhin sind hier periphere Einrichtungen P1 und P2, sowie Versorgungsbaugruppen LTUC1 und LTUC2 dargestellt, welche den Datenverkehr zu den Anschlußbaugruppen der jeweiligen peripheren Einrichtungen regeln. Der peripheren Einrichtung P1 werden Signalisierungsdaten über die Leitung 110 und der peripheren Einrichtung P2 über die Signalisierungsleitung 210 zugeführt.

Wie hier deutlich erkennbar ist, werden bei dieser Anordnung sowohl die zu transportierenden Informationen, als auch die Signalisierungsinformationen einer zentralen Einrichtung ZE1 zugeführt. Hierbei werden von einer Meldungseinrichtung DCL Meldungen 2 gesammelt und verteilt, die zwischen der zentralen Einrichtung ZE1 und den peripheren Einrichtungen P1, P2 ausgetauscht werden. Das Callprozessing CP steuert den Auf- und Abbau von Verbindungen und bedient sich dazu unter anderem gerätespezifischer Schnittstellenfunktionen DH, die beispielsweise in Form von Programmodulen realisiert sind. Dabei werden Einstellbefehle 1 für das Koppelnetz MTS erzeugt. Diese Einstellbefehle geben im wesentlichen an, welcher Eingang des Koppelfeldes mit welchem Ausgang zu verbinden ist, um eine Kommunikationsverbindung bereitzustellen. Steuerungs- und Verbindungsfunktion werden also von einer einzigen räumlich integrierten Funktionseinheit des Kommunikationsnetzes wahrgenommen.

Probleme treten bei derartigen Konfigurationen auf, weil sämtliche zu transportierenden Daten der zentralen Einrichtung ZE1 zugeführt werden müssen. Dies ist selbst dann der Fall, wenn beispielsweise zwei Kommunikationsendgeräte miteinander kommunizieren sollen, die an der selben peripheren Einrichtung P1 angeschlossen sind. Der zu betreibende Verkabelungsaufwand bei derartigen Einrichtungen steigt mit der Entfernung der Endgeräte von der zentralen Einrichtung ZE1 an, so daß diese Art der Anordnung die flächenmäßige Ausdehnung einer Nebenstellenanlage einschränkt, bzw. bei der Abdeckung größere Bereiche die Installation wesentlich verteuert.

Probleme treten in derartigen Einrichtungen ebenfalls bei der modularen Erweiterbarkeit sowohl in der Zahl der Verbindungen, als auch in der Menge der zu übertragenden Daten auf. Diese Art der Ausgestaltung läßt es nicht zu, daß je individueller Kommunikationsverbindung unterschiedliche Datenraten möglich sind.

Eine Anpassung, bzw. transparente Integration unterschiedlicher Netzinfrastrukturen ist ebenfalls nicht möglich.

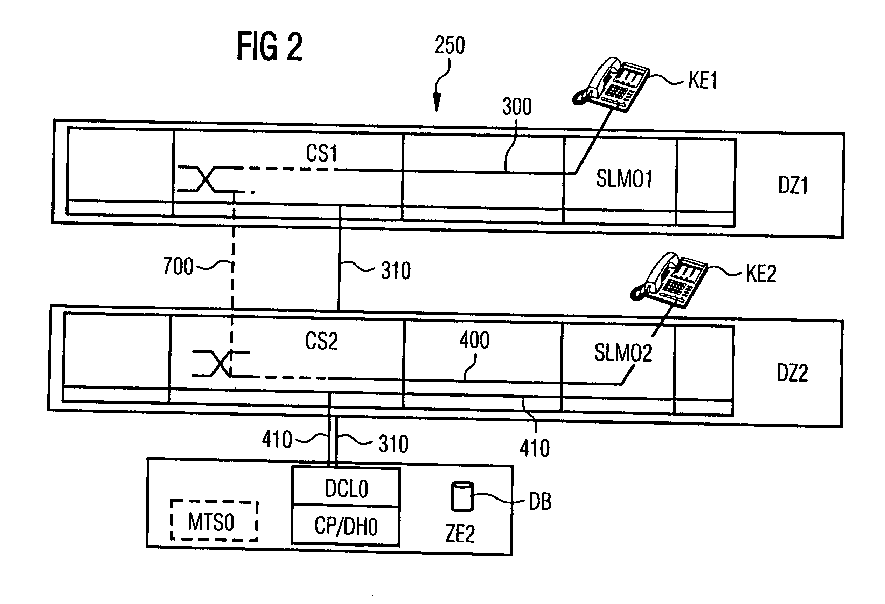

Figur 2 zeigt ein Beispiel einer flexiblen Anordnung zum Aufbau von Kommunikationsverbindungen. Beispielsweise veranschaulicht diese Anordnung den Aufbau einer privaten Unebenstellenanlage 250.

Mit gleichlautenden Bezugszeichen in der Figur 2 sind gleiche Bestandteile der Einrichtung wie in Figur 1 bezeichnet. Beim Betrachten der Figur 2 fällt unmittelbar auf, daß der Transport von Kommunikationsdaten losgelöst vom Meldungsverkehr der Steuermeldungen erfolgt. Dazu ist hier ein separates Transportnetz 700 und ein separates Steuerungsnetz 310/410 vorhanden. Dieser Aufbau einer Vermittlungsanlage hat den Vorteil, daß für das Transportnetz beliebige bereits vorhandene Netze, wie öffentliche oder private Sprach- und Datennetze genutzt werden können. Lediglich das Steuerungsnetz muß dabei zur zentralen Einrichtung ZE2 geführt werden. Durch den Einsatz von Umsetzeinrichtungen, wie bspw. Gateways, sind vorteilhaft beliebige Mischkonfigurationen von Netzen betreibbar und steuerbar.

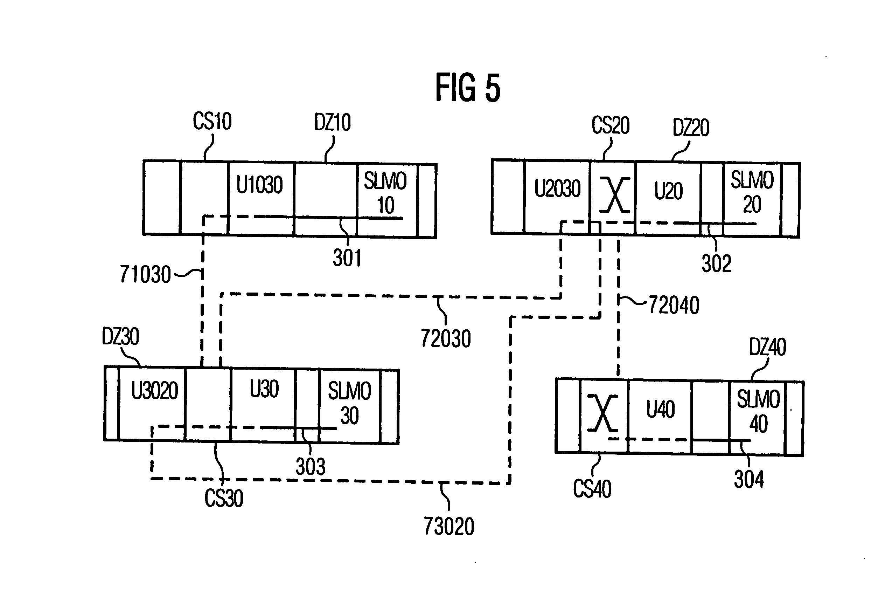

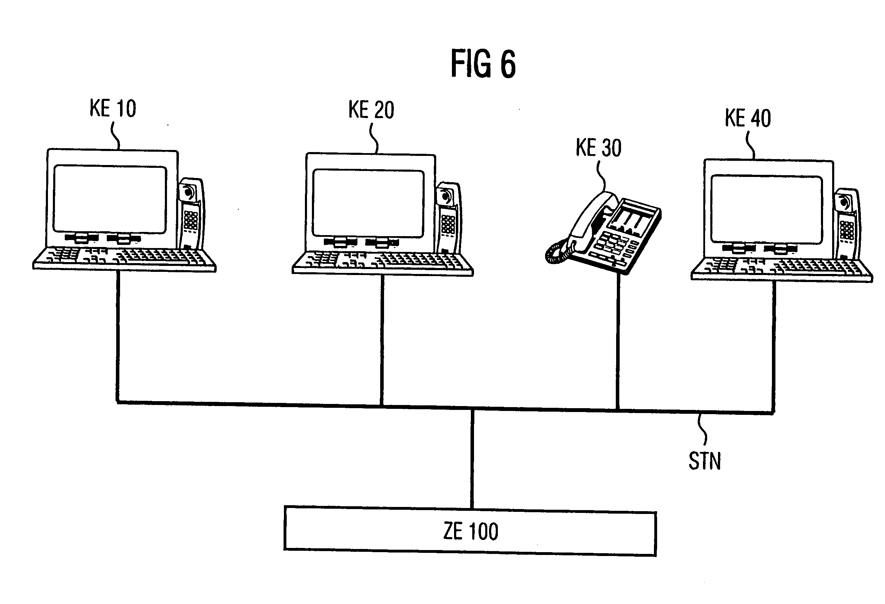

Die digitalen oder analogen Kommunikationsendgeräte KE1 und KE2 sind hier so dargestellt, daß sie jeweils an Anschlußbaugruppen SLMO1 und SLMO2 angeschlossen sind. Ohne Beschränkung der Erfindung sind jedoch in einer solchen Anordnung 250 auch Endgeräte denkbar und integrierbar, welche direkt, unter Umgehung, bzw. ohne SLMO an das Transportnetz 700 anschließbar sind. Es sind also auch ATM-Endgeräte oder auch IP-basierende (Internet Protokoll) Endgeräte anschließbar. Eine Beispiel einer möglichen Mischkonfiguration wird in Figur 5 gezeigt und im zugehörigen Beschreibungsteil erläutert. Direkt angeschlossene Endgeräte zeigt Figur 6 und beschreibt der zugehörige Figurenbeschreibungsteil

Wie ferner erkannt werden kann, weisen die dezentralen Einrichtungen DZ1 und DZ2 jeweils dezentrale Vermittlungseinrichtungen CS1 und CS2 auf, die beispielsweise in Form von Ethernet- oder ATM-Zugangseinrichtungen ausgeführt sein können.

Bei gemischten Transportnetzen sind Gateways und Router sowie Medien beliebiger Art je nach Bedarf miteinander verbindbar. Ebenso veranschaulicht die Darstellung, daß das Koppelfeld MTS0 nicht mehr für Verbindungsaufgaben eingesetzt wird. Statt dessen übernimmt das Transportnetz die Verbindungsaufgaben.

Über die Steuerungsleitungen 410 und 310 wird bei vorliegender Anordnung hierzu lediglich für die jeweiligen dezentralen Vermittlungseinrichtungen CS1 und CS2 je mindestens eine Steuerungsinformation zum Aufbau der Kommunikationsverbindung bereitgestellt, die aus einer zeitschlitzbezogenen Steuerungsinformation abgeleitet wird. Der Austausch der Informationen erfolgt über Meldungen. Ferner ist der Figur zu entnehmen, daß auf einer Datenstrecke 300 bzw. 400 eine Umwandlung von PCM-Daten in Zellendaten gemäß dem Standard des Transportnetztypes 700, wie beispielsweise ATM-Zellendaten, durchgeführt wird. Hierbei ist zu vermerken, daß die Verwendung eines ATM-Netzes als Transportnetz lediglich als Ausführungsbeispiel dient. Es kommen ebenfalls Ethernet-Netze, andere IP-Verbindungen oder sogar TDM-Verbindungen in Betracht. Die Auswahl ist abhängig vom beabsichtigten Einsatzzweck und erstreckt sich auf die gesamte Palette an verfügbaren Netzen und auch optischen Medien, sowohl im schmalbandigen, als auch im breitbandigen Bereich.

Gegebenenfalls können verschiedene Transportnetze vorhanden sein, dann stellen Gateways die Verknüpfung der verschiedenen Teilnetze sicher.

Es wird auf den dezentralen Vermittlungseinrichtungen CS1 und CS2 ein transportnetzabhängiges Callprozessing durchgeführt, welches jedoch im wesentlichen auf Basic Call Funktionalität beschränkt ist. Leistungsmerkmale werden durch die zentrale Steuerung ZE2 realisiert und bereitgestellt. Verbindungen zwischen den unterschiedlichen dezentralen Einrichtungen werden durch die zentrale Einrichtung ZE2 über Signalisierungsmeldungen gesteuert. Die Vorteile dieser Anordnung bestehen darin, daß sie sowohl schmalband- als auch breitbandfähig ist. Sie ermöglicht die Integration beliebiger Netzarten und Topologien. Ferner kann das Transportnetz sowohl auf öffentlichen, als auch auf privaten Netzen eingerichtet sein, oder auch aus einer Mischung bestehen. Vorteilhaft besteht die Möglichkeit, räumlich unbegrenzt entfernte dezentrale Einrichtungen der zentralen Einrichtung ZE2 zuzuordnen, so daß auch räumlich sehr ausgedehnte und leistungsfähige Einrichtungen durch eine derartige private Nebenstellenanlage bereitgestellt werden können. Durch die Beibehaltung einer gemeinsamen Steuerung besteht die Möglichkeit, bereits vorhandene Software mit minimalen Änderungen weiter zu verwenden. Ein Vorteil einer derartigen-Einrichtung 250 gegenüber einem vernetzten System aus Einrichtungen 150 besteht darin, daß das verteilte System eine Einzelanlage ist, weswegen ebenfalls Leistungsmerkmale und Applikationen betreibbar sind, die lediglich anlagenweit implementiert sind, weil sie sich aus Applikationssicht wie eine einzige Anlage darstellt. Damit entfällt die Umstellung dieser Verfahren, um sie für den Betrieb auf einem Netz zu befähigen.

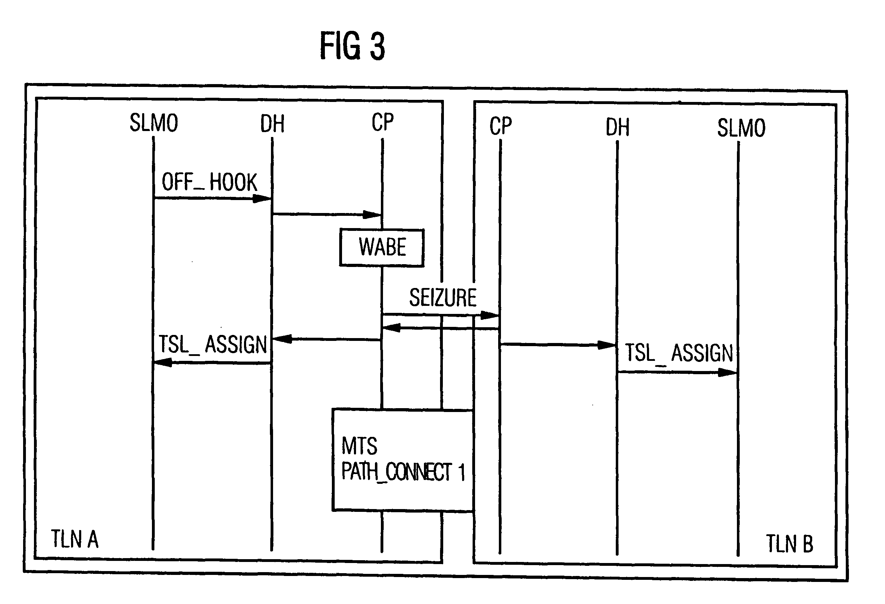

Figur 3 zeigt in vereinfachter Form beispielhaft einen Meldungsablauf zur Verbindungssteuerung eines herkömmlichen Kommunikationssystems zum Aufbau einer Verbindung zwischen zwei peripheren Einrichtungen, an welche das Endgerät eines Teilnehmers A, TLNA und das Endgerät eines Teilnehmers B, TLNB angeschlossen sind. Die zeitliche Abfolge der Meldungen, bzw. Steuerungungsnachrichten, ist von oben nach unten gegeben. Zunächst hebt der Teilnehmer A ab und generiert die Signalisierungsinformation OFF HOOK. Anschließend wird eine Wahl des gewünschten Kommunikationspartners durch Eingabe einer Wahlinformation durchgeführt, welche von einem gerätespezifischen Schnittstellenmodul DH an das Callprozessing CP des Teilnehmers A weitergegeben wird.

Die Wahlbewertung WABE der Wahlinformation führt dazu, daß eine Nachricht SEIZURE an das Callprozessing CP des Teilnehmers B weitergegeben wird. Ein dort zuständiges gerätespezifisches Schnittstellenmodul DH weist der Verbindung einen expliziten Zeitschlitz, bspw. ZS1 einer definierten PCM-Datenstrecke, bspw. PD1 zu und generiert die Steuerungsnachricht TSL_ASSIGN an die Anschlussbaugruppe SLMO1. Diese Steuerungsnachricht übermittelt der Anschlussbaugruppe SLMO1 den expliziten Zeitschlitz ZS1 und die festgelegte PCM-Datenstrecke PD1, die für die Verbindung genutzt werden sollen. Der explizite Zeitschlitz ZS1 der PCM-Datenstrecke PD1 transportiert Kommunikationsdaten auf der Teilverbindung zwischen Anschlussbaugruppe SLMO1 und MTS. Ein zweiter expliziter Zeitschlitz ZS2 einer zweiten explizit festgelegten PCM-Datenstrecke PD2 wird für die Teilverbindung zwischen MTS und Anschlussbaugruppe SLMO2 benötigt. Die Steuerinformation ZS2 und PD2 wird der Anschlussbaugruppe SLMO2 wiederum mit einer Steuerungsnachricht TSL ASSIGN mitgeteilt.

TDM-basierte private Nebenstellenanlagen benutzen zur physikalischen Verbindung einzelner Teilnehmer ein TDM-Koppelfeld MTS. Für dieses Koppelfeld wird ein Einstellbefehl PATH_CONNECT1 abgesetzt, der bewirkt, daß der Zeitschlitz ZS1 von PCM-Datenstrecke PD1 mit dem Zeitschlitz ZS2 der PCM-Datenstrecke PD2 verbunden wird. Damit sind die beiden Teilverbindungen zu einer durchgehenden Strecke zwischen SLMO1 und SLMO2 verbunden.

Zur Ausführung des Verfahrens ist es unerheblich ob CP und DH Bestandteil der Steuerungssoftware sind, und ob sie als einzelne Module oder integriert vorliegen.

Figur 4 zeigt in vereinfachter Form beispielhaft einen Meldungsablauf zwischen zwei dezentralen Einrichtungen, zur Verbindungssteuerung. An diese sind das Endgerät eines Teilnehmers A, TLNA und das Endgerät eines Teilnehmers B, TLNB angeschlossen. Als Transportnetz kommt hier beispielhaft ein ATM-Netz zum Einsatz. Die zeitliche Abfolge der Meldungen ist wieder von oben nach unten dargestellt.

Eine Funktionseinheit STMA setzt als Gateway die Zeitschlitze des PCM-Datenstroms in einen Zellenstrom von ATM-Zellen um. Im in Figur 2 dargestellten Ausführungsbeispiel ist die Umsetzeinrichtung jeweils in der dezentralen Vermittlungseinrichtung CS1, bzw. CS2 integriert und deswegen nicht separat dargestellt.

Der Meldungsablauf unterscheidet sich von dem in Figur 3 dargestellten Ablauf erst ab dem Punkt, an dem für das TDM-Koppelfeld der Einstellbefehl PATH_CONNECT1 abgesetzt wird. Statt einem Einstellbefehl PATH_CONNECT1 wird bei dieser Ausführungsform eine Steuerungsnachricht PATH_CONN2 generiert, die an die dezentralen Vermittlungseinrichtungen gesendet wird. Diese bauen daraufhin eine Verbindung im Transportnetz auf. Bei Einsatz eines ATM Transportnetzes wird beispielsweise durch festgelegte ATM Signalisierungsverfahren eine ATMSVC aufgebaut (ATM Switched Virtual Connection).

Die Steuerungsnachricht PATH_CONN2 muß dazu die Zeitschlitz- und Datenstreckeninformationen ZS und PD enthalten, die beispielsweise direkt aus der Einstellmeldung PATH_CONNECT1 entnommen werden können. Darüber hinaus muß von der zentralen Steuereinrichtung lediglich die transportnetzabhängige Adresse der dezentralen Vermittlungseinrichtung angegeben werden, zu der die Verbindung aufgebaut werden soll. D.h. die Daten, die für die zentrale Steuerung als Information über das Transportnetz bereitgestellt werden müssen, beschränken sich auf die transportnetzabhängigen Adressen der jeweiligen dezentralen Vermittlungseinrichtungen. Die zentrale Steuereinrichtung ermittelt die erforderlichen Adressen wiederum aus der Zeitschlitz- und Datenstreckeninformation ZS und PD. Zuordungstabellen in einer zentralen Datenbasis DB regeln die Abbildung von Zeitschlitz/Datenstrecke zu dezentraler Vermittlungseinrichtung.

Dieses Prinzip ist auch zur Steuerung von heterogenen Transportnetzen geeignet. Es muß ggf. zusätzlich der Netztyp und das verfügbare Gateway mit abgelegt werden.

In der Steuerungsnachricht PATH_CONN2 können auch noch andere Informationen enthalten sein, und sie kann auch in mehreren spezifischeren Ausprägungen generiert werden. Sollen Verbindungen unterschiedlicher Bandbreiten aufgebaut werden, können darin Informationen über die gewünschte Bandbreite enthalten sein. Alternativ kann die Bandbreiteninformation auch direkt zwischen Anschlussbaugruppe und Vermittlungseinrichtung ausgetauscht werden.

Haben die dezentralen Vermittlungseinrichtungen nach Erhalt der PATH_CONN2 Meldung eine Verbindung im Transportnetz 700 aufgebaut, werden die Nutzdaten darüber übertragen. Die Zuordnung des Nutzdatenstroms auf der Datenstrecke 300/400 zwischen Anschlussbaugruppe und dezentraler Einrichtung DZ zu einer Verbindung zwischen DZ1 und DZ2 erfolgt durch eine Abbildung von Zeitschlitzangabe ZS und PD zu Verbindungsidentifikator der Verbindung.

Dies bedeutet, daß trotz der möglicherweise komplizierten Abläufe bei einem Verbindungsaufbau über das Transportnetz von der zentralen Steuerung ZE2 lediglich diese Adressen an das Call Processing des Transportnetzes weitergegeben werden müssen, um dort eine Verbindung herzustellen. Den Rest besorgt das transportnetzspezifische Call Processing.

Gemäß diesem Meldungsablauf wird der PATH_CONNECT Befehl also durch ein transportnetzspezifisches Callprozessing ersetzt. Um TDM-basierte Teilnehmer transportnetzunabhängig durch dezentrale Vermittlungseinrichtungen verbinden zu können, wird eine Konvertierung von Zeitschlitzen in Transporteinheiten benötigt. Dies geschieht in einer Konvertierungseinheit, wie beispielsweise STMA von der je dezentraler Einrichtung mindestens eine vorhanden ist und bevorzugt in den Weg der Nutzdaten eingeschleift wird. Zu diesem Zweck kann ein ATM-PCM-Gateway, ein IP-PCM Gateway, oder ein anderes benötigtes Gateway vorgesehen sein.

Das beschriebene Verfahren ist jedoch nicht auf dynamisch aufgebaute Wählverbindungen beschränkt, sondern kann sich ebenso einer ATMPVC bedienen (ATMPVC Permanent virtual connection). Die Informationen bezüglich der Adresse müssen dann ggf. mit Informationen, welche die Benutzung von Festverbindungen regeln, ergänzt werden. Weiterhin können auch andere Formen der Datenübertragung genutzt werden, wie z.B. IP Verbindungen, oder FDDI (Fiber Distributed Data Interface) etc.

Figur 5 zeigt als Ausführungsbeispiel eine Kommunikationsanordnung bei der dezentrale Einrichtungen DZ durch ein heterogenes Transportnetz miteinander verbunden sind, wobei sich die Verbindungen dieses Transportnetzes dadurch auszeichnen, daß Teilverbindungen über unterschiedliche Kommunikationsmedien, bzw. unter Abhandlung unterschiedlicher Kommunikationsprotokolle auf diesen Teilverbindungen zustande kommen.

Ebenso wie die Anordnung, die in Figur 2 dargestellt und beschrieben wurde, wird auch dieses gemischte Kommunikationssystem durch eine zentrale Steuerungseinrichtung gesteuert, wobei für den Verbindungsaufbau, bzw. Unterhalt oder Abbau der Verbindung Steuerungsmeldungen von der zentralen Steuerung abgegeben werden und zu den dezentralen Vermittlungseinrichtungen CS versandt werden. Der Meldungsaustausch findet auch hier über ein Steuerungsnetz statt, das aber wegen der Übersichtlichkeit der Darstellung nicht gezeigt ist. Die Bezugszeichen in der Figur sind in gleicher Weise zu interpretieren, wie die Bezugszeichen bei der Beschreibung der anderen Figuren. Sofern dies nicht ausdrücklich anders erwähnt ist, haben dabei gleich bezeichnete Funktionselemente der Figur auch den selben Funktionsumfang.

Im einzelnen sind dezentrale Einrichtungen DZ10 bis DZ40 dargestellt, welche Anschlußbaugruppen für nicht gezeigte Kommunikationsendgeräte SLM010 bis SLM040 aufweisen. Des weiteren sind Umsetzeinrichtungen U in den jeweiligen dezentralen Einrichtungen DZ vorgesehen, die eine Medienanpassung, bzw. eine Protokollanpassung der unterschiedlichen Teilverbindungsstrecken aneinander vornehmen.

Ferner sind dezentrale Vermittlungseinrichtungen CS10 bis CS40 dargestellt. Zwischen den Umsetzeinrichtungen und den Anschlußbaugruppen SLMD befinden sich TDM-Datenstrecken 301 bis 304. Im einzelnen sind zwischen den dezentralen Einrichtungen DZ die Teilverbindungsstrecken 71030, 72030, 72040 und 73020 vorhanden. Bei den Verbindungen 72040 und 73020 handelt es sich beispielsweise um Transportnetz-Teilverbindungen auf Basis eines ATM-Netzes. Auf den gezeigten Verbindungen 72030 und 71030 wird als Kommunikationsprotokoll das Internetprotokoll eingesetzt.

Das Internetprotokoll IP kann sowohl auf einer ATM-Verbindung, als auch auf einer Ethernet-Verbindung eingesetzt werden. Gemäß dem ISO/OSI (Open Systems Interconnect) Protokollstandard, können obere Schichten eines Kommunikationsprotokolles auf unterschiedlichen Medien eingesetzt werden. Im einzelnen besteht dieses standardisierte Protokoll aus sieben Schichten, wobei die unterste Schicht die physikalische Schicht, die zweite Schicht die Link-Schicht, die dritte die Netzvermittlungschicht, die vierte die Transportschicht, die fünfte die Sitzungssteuerung, die sechste die Datendarstellung und die siebte die Anwendungsschicht darstellt. Bei diesen nach ISO IS8802 standardisierten Schichtenprotokoll benutzt jede Schicht die Dienste der darunterliegenden Schicht. Meldungen, beispielsweise in Form von Steuerungsmeldungen, die unter Zuhilfenahme dieses Schichtenprotokolles übertragen werden, erhalten also sukzessive je Schicht eine zusätzliche Information, wodurch eine Datenstruktur entsteht, bei welcher den Originalmeldungen sieben schichtenspezifische Informationsbestandteile hinzugefügt werden. Im Rahmen dieses Kommunikationsprotokolles sind also beliebige Kommunikationsmedien und beliebige Schichten miteinander koppelbar.

Die Umsetzeinrichtungen U sind erforderlich, um eine Anpassung des unterschiedlichen Schichtenaufbaus aneinander vorzunehmen. Die Umsetzeinrichtung U20 wandelt beispielsweise ATM-Zellendaten in TDM-Daten um. Diese ATM-Zellendaten können dann beispielsweise in der dezentralen Einrichtung DZ20 über die dezentrale Vermittlungseinrichtung CS20 und über die Teilverbindungsstrecke 73020 als ATM-Zellendaten direkt weitergegeben werden.

Es besteht jedoch ebenfalls die Möglichkeit, sie an eine Umsetzeinrichtung U2030 weiterzuleiten, die beispielsweise als ATM/IP-Gateway ausgeführt ist. Dort werden ATM-Zellendaten für das Internetprotokoll aufbereitet und sind dann über die Teilverbindungen 72030 an die dezentrale Vermittlungseinrichtung CS30 der dezentralen Einrichtung DZ 30 weiterleitbar. Bemerkenswert an dieser Konfiguration ist also, daß Endgeräte an der dezentralen Einrichtung DZ20 mit Endgeräten der dezentralen Einrichtung DZ30 sowohl über das Internetprotokoll kommunizieren können, als auch nach dem asynchronen Transfermodus direkt erreichbar sind.

Eine zentrale Steuerungseinrichtung benötigt also, um die unterschiedlichen Teilverbindungsstrecken 72030, bzw. 73020 ansteuern zu können, für Steuerungsmeldungen zur Steuerung eines Verbindungsaufbaus zwischen Kommunikationsteilnehmern entsprechende ergänzende Steuerungsinformationen, welche die Art des Verbindungsweges und protokollspezifische Informationen, d.h. einzusetzende Gateways betreffen.

Die Konvertierungseinrichtung U3020 in der dezentralen Einrichtung DZ30 ist beispielsweise als ATM/IP-Gateway ausgeführt. Die dezentrale Vermittlungseinrichtung CS30 stellt beispielsweise einen IP-Router oder Switch dar, während U30 als TDM/IP-Gateway ausgeführt ist. Ebenso ist die dezentrale Vermittlungseinrichtung CS10 der dezentralen Einrichtung DZ10 als IP-Router/Switch ausgeführt, während die Umsetzeinrichtung U1030 in Form eines TDM/IP-Gateways vorliegt.

In der dezentralen Einrichtung DZ40 ist ebenfalls eine dezentrale Vermittlungseinrichtung CS40 in Form einer ATM-Vermittlung vorgesehen, die mit einer Umsetzeinrichtung U40 verbunden ist, welche eine Umsetzung von TDM-Daten in ATM-Zellendaten vornimmt.

Zusatzinformationen für die Steuerung, über die Erreichbarkeit der einzelnen Teilnehmer mittels bestimmter Gateways bzw. über bestimmte Umsetzeinrichtungen und Vermittlungseinrichtungen, sowie deren zugehörige dezentrale Einrichtungen sind beispielsweise in einer Datenhaltung einer zentralen Steuerungseinrichtung abgelegt.

Diese zentral gehaltenen Informationen können entweder an die dezentralen Einheiten verteilt werden und damit für den Fall eines Verbindungsaufbaus Grundlage einer eigenen Entscheidung der dezentralen Einheiten über einzusetzende Kommunikationsprotokolle und nutzbare Transportmedien sein, oder die Entscheidung wird in der Zentrale gefällt und der dezentralen Einrichtung mitgeteilt.

Gemäß den Steuerungsinformationen in dieser Datenbasis wird für eine oder mehrere jeweilige Teilverbindungen, wie beispielsweise von DZ40 nach DZ10 über die Teilverbindungen 72040 und 71030 eine entsprechende Anzahl von Steuerungsmeldungen erzeugt, die an die jeweiligen dezentralen Vermittlungseinrichtungen übertragen werden, um bspw. den Verbindungsaufbau zu steuern.

Die hier gezeigten Verbindungsvarianten stellen selbstverständlich nur eine Untermenge der technisch möglichen Varianten von Teilverbindungsstrecken, Kommunikationsmedien, Kommunikationsprotokollen und Umsetzeinrichtungen dar, auf die Erfindung ohne Einschränkung anwendbar ist, die nicht alle aufgeführt werden können.

Beispielsweise ist es ebenso möglich, im Bereich von dezentralen Einrichtungen DZ dezentrale Datenhaltungen vorzusehen, deren Informationsbestand sich lediglich auf Einrichtungen beschränkt, die in den jeweiligen dezentralen Einrichtungen DZ vorhanden sind. Für den Fall einer Verbindungssteuerung müssen dann zwar von der zentralen Steuerung diese Informationen zunächst abgefragt werden. Solche Konfigurationen haben aber den Vorteil, daß dezentrale Einrichtungen auch dezentral gewartet und gepflegt werden können. Auch ist eine Redundanz der Datenhaltung, und eine bessere Verfügbarkeit der Kommunikationseinrichtungen gegeben, weil, falls eine dezentrale Datenhaltung ausfällt, nicht das gesamte Netz davon betroffen ist.

Beispielsweise ist es ebenso möglich, im Bereich von dezentralen Einrichtungen DZ Daten aus der Zentrale zu empfangen, deren Informationsbestand sich auf die Partnereinrichtungen dezentraler Einrichtungen beschränkt.

Für den Fall einer Verbindungssteuerung kann dann die dezentrale Einrichtung selbständig über den Einsatz der richtigen Gateways entscheiden.

Ein besonderer Vorteil einer gezeigten Kommunikationsanordnung besteht darin, daß beliebige Infrastrukturen aneinander angepaßt werden können, und daß wegen der gezielten Steuerbarkeit der Teilverbindungsstrecken und der benötigten Umsetzeinrichtungen ein ressourcenschonender Verbindungsaufbau erfolgen kann, bei dem unnötige Umsetzschritte zur Protokoll- oder Medienanpassung optimal vermieden werden können.

Ebenfalls sind ohne aufwendige technische Anpassungsentwicklungen beliebig heterogene Transportnetze durch eine zentrale Steuerungseinrichtung steuerbar, weil vorteilhaft ein transportnetzspezifisches Callprocessing eingesetzt werden kann, das auf Informationen aufsetzt, die von einer TDM-basierten Steuerung erzeugt wurden.

Wie dies im einzelnen erfolgt kann, wurde bereits bei der Erläuterung von Figur 4 beschrieben. Die erforderliche Datenhaltung in einer solchen Anordnung kann auf ein Mindestmaß beschränkt werden, weil lediglich die transportnetzspezifischen Daten zusätzlich abgespeichert werden müssen. Ebenfalls kommen in einer solchen Kommunikationseinrichtung die Vorteile einer einzigen privaten Nebenstellenanlage zum tragen, wie bspw. die zentrale Verfügbarkeit von Leistungsmerkmalen, die zentrale Administrierbarkeit und eine zentrale Applikationsschnittstelle. Vorteilhaft entsteht so aus mehreren verschiedenen ggf. schon vorhandenen Teilnetzen ein einheitliches Kommunikationssystem, daß nach außen das Erscheinungsbild einer einzigen Anlage bietet, aber durch die Wahl der Umsetzeinrichtungen flexibel an die technischen Erfordernisse des Kunden angepaßt werden kann.

Figur 6 zeigt eine besonders vorteilhafte Kommunikationsanordnung, mit über ein Ethernet verbundenen Kommunikationsendgeräten KE10 bis KE40, die über ein Steuerungsnetz STN von einer zentralen Einrichtung ZE 100 aus gesteuert werden. Die Verbindung kann dabei sowohl über ein Ethernet, als auch über ein ATM-Netz, bzw. über eine Mischkonfiguration des Transportnetzes bestehen. Bei dieser Ausführungsform einer Anordnung sind die benötigten Einrichtungen zur Herstellung, zum Aufbau, zum Abbau und zum Unterhalt von Kommunikationsverbindungen, die bei der Beschreibung von Figur 5 in einer dezentralen Einrichtung DZ enthalten waren, alle in einem Kommunikationsendgerät KE integriert. Die Anzahl und Auswahl der vorhandenen Komponenten je Endgerät hängt von der Art der eingesetzten Kommunikationsprotokolle und der zur Verfügung stehenden Kommunikationsmedien ab.

Durch eine derartige Anordnung besteht die Möglichkeit, Telefonie-Teilnehmer am Internet-Protokoll- mit TDM-Teilnehmern zu verbinden. Durch die zentrale Steuerung wird dabei das Callprozessing, für die TDM-Teilnehmer durchgeführt. In bezug auf die IP-Telefonie-Teilnehmer ist beispielsweise eine Erweiterung der Funktionalität ihrer Einrichtungen vorzunehmen, damit sie den nach den ITU-Protokollen H.323 und H.450 standardisierten Funktionsumfang bereitstellen können. Vorteilhaft kann dies dadurch geschehen, daß die gerätespezifischen Anpassungsmodule DH für die Ansteuerung von IP-Teilnehmern mit der Funktionen der H.323 und H.450 Protokolle ausgestattet werden. Diese Anordnungsvariante ist besonders vorteilhaft, weil auf eine einfache Art Telefonie basierend auf dem Internetprotokoll mit TDM-basierender Telefonie verknüpft werden kann. Der Entwicklungsaufwand zur Anpassung der zentralen Steuerungseinrichtung ZE100 an die Kommunikationsendgeräte KE ist dabei minimal und erfordert lediglich die Entwicklung eines speziellen Softwaremoduls DH.

Die dezentralen Vermittlungseinrichtungen der Kommunikationsendgeräte KE sind beispielsweise in Form von Netzwerktreiberkarten für das Ethernet vorhanden. Ein eindeutiger Bezug von Internetadressen (IP-Adressen) zu den Verbindungsmerkmalen einer TDM-Verbindung kann dadurch hergestellt werden, daß einer IP-Adresse beispielsweise genau eine dezentrale Einrichtung mit einer Teilnehmeranschlußbaugruppe und einem Teilnehmeranschluß zugeordnet wird, welche wiederum über genau einen TDM-Datenweg erreichbar ist. Die dezentrale Einrichtung, die Teilnehmeranschlußbaugruppe, der Teilnehmeranschluß und der TDM-Datenweg sind dabei nicht physikalisch vorhanden, sondern nur fiktiv in der Software eingerichtet. Dadurch kann eine übliche Steuerung ohne großen Änderungsaufwand weiterverwendet werden. Die Änderungen sind dann größtenteils auf Konfigurationsdaten beschränkt.

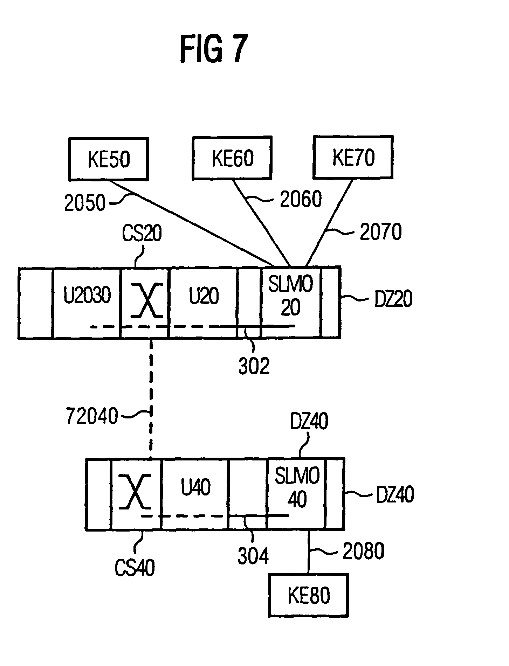

Figur 7 zeigt eine Teilansicht der Darstellung aus Figur 5, zur Veranschaulichung einer vorteilhaften Ausführungsform einer Kommunikationsanordnung und einer speziellen Betriebsweise dieser Anordnung. Die Bezugszeichen sind hier analog zu den übrigen Figuren verwendet. Daß diese Darstellung lediglich zwei dezentrale Einrichtungen DZ20 und DZ40 zeigt, soll nicht bedeuten, daß eine derartige Ausgestaltung einer Kommunikationsanordnung lediglich auf zwei dezentrale Einrichtungen beschränkt werden kann. Vielmehr kann jede dezentrale Einrichtung einer Kommunikationsanordnung mit den vorteilhaften Ausgestaltungen, auf die im Folgenden noch eingegangen wird, ausgestattet werden.

Im Unterschied zu der Darstellung in Figur 5 sind hier Endgeräte KE50, KE60, KE70 und KE80 gezeigt. Während die Endgeräte KE50 bis KE70 über Kommunikationsleitungen 2050 bis 2070 an die dezentrale Einrichtung DZ20 und dort an die Anschlußbaugruppe SLM020 angeschlossen sind, ist das Kommunikationsendgerät KE80 über eine Verbindungsleitung 2080 mit der Baugruppe SLM040 in der dezentralen Einrichtung DZ40 verbunden. Wie schon zuvor erläutert, kommunizieren diese Baugruppen SLM020 und SLM040 über TDM-Verbindungen 304, bzw. 302 mit den entsprechenden dezentralen Vermittlungseinrichtungen CS20 und CS40. Wie in diesem Zusammenhang bereits beschrieben wurde, wird üblicherweise bei einer beschriebenen Anordnung ein transportnetzspezifisches Callprocessing durchgeführt. Dieser übliche Fall tritt beispielsweise ein, wenn das Kommunikationsendgerät KE80 über seine Verbindungsleitung 2080 die TDM-Datenstrecke 304, die Umsetzeinrichtung U40, die dezentrale Vermittlungseinrichtung CS40 über eine Transportnetzstrecke 72040 mit einem der Kommunikationsendgeräte KE50 bis KE70 über die dezentrale Vermittlungseinrichtung CS20 die Umsetzeinrichtung U20 und die TDM-Datenstrecke 302 über die Anschlußbaugruppe SLM020 kommunizieren will.

Bei dieser speziellen Ausgestaltung jedoch soll verhindert werden, daß falls Kommunikationsendgeräte, die an der selben Anschlußbaugruppe, bzw. an der selben dezentralen Einrichtung DZ20 angeschlossen sind, über die Umsetzeinrichtung U20 miteinander kommunizieren, weil derartige Kommunikationsendgeräte direkt über den TDM-Datenstrom durch Vermittlung ihrer jeweiligen Zeitschlitze verbunden werden können und eine Umsetzung der TDM-Daten in ein transportnetzspezifisches Format überflüssigerweise Umsetzkapazität bindet. Es soll also durch eine günstige Bearbeitung bei der Behandlung einer Verbindung zwischen den Kommunikationsendgeräten KE50 bis KE70 verhindert werden, daß auszutauschende Kommunikationsdaten über die Umsetzeinrichtung U20 in ein transportnetzspezifisches Format gewandelt werden und dann wieder zurück umgesetzt werden müssen. Für das Callprocessing in einer derartigen Anordnung werden zeitschlitzbezogene Informationen über die beteiligten Kommunikationsteilnehmer benötigt. Als ergänzende Informationen werden zusätzlich Informationen über die Adresse von dezentralen Einrichtungen, an welchen diese Kommunikationsendgeräte angeschlossen sind, für den gezielten Verbindungsaufbau mitgegeben.

Bei einer Anordnung nach Art der Darstellung in Figur 7 wird als protokollspezifische Information die Adresse der dezentralen Einrichtung analysiert und falls es sich bei der Adresse der beteiligten dezentralen Einrichtungen DZ und der zu verbindenden Endgeräte um eine identische Adresse handelt, d.h. Endgeräte, die an der gleichen dezentralen Einrichtung DZ angeschlossen sind, so wird eine Umsetzung der TDM-Daten unterbunden und eine direkte Verbindung zwischen den Endgeräten hergestellt. Dies hat den Vorteil, daß die Umsetzeinrichtung, hier U20, für andere Umsetzvorgänge zur Verfügung steht, daß das Transportnetz durch derartige Vorgänge nicht belastet wird, keine Gebühren im Transportnetz anfallen und ebenso die dezentrale Vermittlungseinrichtung andere Aufgaben übernehmen kann. Es wird also in diesem Fall bei Behandlung einer Verbindung eine Überprüfung der Adresse einer dezentralen Einrichtung davon betroffener Kommunikationsendgeräte KE in einer jeweiligen dezentralen Einrichtung DZ durchgeführt. Vorteilhaft wird bei einem positiven Ergebnis dieser Überprüfung ein Signal an einen Zugriffsbaustein auf den TDM-Datenstrom abgegeben, der die Aufgabe hat, die Zeitschlitze von dem TDM-Datenstrom abzugreifen, bzw. auf den TDM-Datenstrom zu geben. Mit Hilfe dieses Signals, wird beispielsweise durch diesen Baustein ein Kurzschluß in der Weise herbeigeführt, daß die Schreib- und Leserichtung der beteiligten Kommunikationsendgeräte miteinander vertauscht wird. Dieser Baustein kann ggf. als Koppelfeld ausgeführt sein.

Die Überprüfung der Adressen kann sowohl in der dezentralen Einrichtung erfolgen, als auch in der zentralen Einrichtung. Für den Fall einer zentralen Überprüfung, wird die dezentrale Vermittlungseinrichtung darüber informiert, daß ein Kurzschluß einzulegen ist.

## Patentansprüche

1. Verfahren zum Auf- und/oder Abbau bzw. Unterhalt einer Kommunikationsverbindung, bei dem
- eine Kommunikationsverbindung zwischen mindestens zwei dezentralen Einrichtungen (DZ10-DZ40) bereitgestellt wird, **dadurch gekennzeichnet, dass**
- die Kommunikationsverbindung durch den dezentralen Einrichtungen (DZ10-DZ40) zugeordnete dezentrale Vermittlungseinrichtungen (CS1, CS2, CS10-CS40) in einem Transportnetz (71030, 72030, 72040, 73020) bereitgestellt wird, wobei auf den dezentralen Vermittlungseinrichtungen (CS1, CS2, CS10-CS40) ein transportnetzabhängiges Callprozessing durchgeführt wird,
- der Auf- und/oder Abbau der Kommunikationsverbindung durch eine zentrale Steuerungseinrichtung (ZE2, ZE100) über ein Steuerungsnetz (310, 410, STN) zu den dezentralen Vermittlungseinrichtungen (CS1, CS2, CS10-CS40) gesteuert wird,
- zur Steuerung des Verbindungsauf- und/oder -abbaus im Transportnetz mindestens zwei Steuerungsinformationen verwendet werden,
- eine zur Definition einer Zeitschlitzverbindung über ein Koppelfeld geeignete Verbindungsinformation eine erste Steuerungsinformation darstellt,
- eine Protokollinformation eine zweite Steuerungsinformation darstellt und für die zentrale Steuerungseinrichtung (ZE2, ZE100) und/oder für die dezentralen Einrichtungen (DZ10-DZ40) zur Auswahl zu verwendender Kommunikationsprotokolle und nutzbarer Transportmedien bereitgestellt werden/wird.

2. Verfahren nach Anspruch 1,
bei dem auf den dezentralen Vermittlungseinrichtungen (CS1, CS2, CS10-CS40) das transportnetzabhängige Callprozessing im wesentlichen auf Basic Call Funktionalität beschränkt wird.

3. Verfahren nach einem der vorangehenden Ansprüche,
bei dem die Steuerungsinformation durch eine das Transportnetz betreffende Medieninformation ergänzt wird, die mindestens ein Transportnetzmedium der Kommunikationsverbindung identifiziert.

4. Verfahren nach einem der vorangehenden Ansprüche,
für eine Kommunikationsverbindung aus mindestens zwei Teilverbindungen (73020, 72030) im Transportnetz, wobei auf jeder Teilverbindung mindestens jeweils ein Kommunikationsprotokoll zur Anwendung kommt, dessen Schichtenaufbau sich in mindestens einer Schicht unterscheidet und bei dem die Steuerungsinformation durch eine Information ergänzt wird, die eine Umsetzvorrichtung (U20, U2030, U30, 3020) für die verschiedenen Kommunikationsprotokolle identifiziert.

5. Verfahren nach einem der vorangehenden Ansprüche,
für eine Kommunikationsverbindung aus mindestens zwei Teilverbindungen im Transportnetz, wobei auf jeder Teilverbindung mindestens jeweils ein Kommunikationsprotokoll zur Anwendung kommt, dessen Schichtaufbau sich in mindestens einer Schicht unterscheidet, bei dem die Steuerungsinformation durch eine Information ergänzt wird, die eine Medienzugangseinrichtung (CS10, Cs30) für ein jeweiliges Kommunikationsmedium identifiziert.

6. Verfahren nach einem der vorangehenden Ansprüche, bei dem eine Information zur Ergänzung der Steuerungsinformation im Bereich der zentralen Steuerungseinrichtung (ZE2, ZE100) zentral bereitgehalten wird.

7. Verfahren nach einem der Ansprüche 1 bis 5,
bei dem eine Information zur Ergänzung der Steuerungsinformation dezentral bereitgehalten wird und im Zuge der Behandlung einer Kommunikationsverbindung (71030, 72030, 73020, 72040) mindestens einmal von der zentralen Steuerungseinrichtung (ZE2, ZE100) ermittelt wird.

8. Verfahren nach einem der vorangehenden Ansprüche,
bei dem auf den Teilverbindungen zwischen dezentralen Einrichtungen (DZ10,..,DZ40) des Transportnetzes nach dem Internetprotokoll übertragen wird und bei dem zur Verbindungssteuerung einer IP-Adresse genau ein Teilnehmeranschluß (KE) eines PCM-Datenstromes und eine dezentrale Einrichtung (DZ) zugeordnet wird.

9. Verfahren nach einem der vorangehenden Ansprüche,
bei dem anhand von Steuerungsinformationen überprüft wird, ob ein Verbindungsaufbau über das Transportnetz (72040) erforderlich ist, und falls nicht die Verbindung anderweitig bereitgestellt wird.

10. Verfahren nach Anspruch 9,
bei dem als Steuerungsinformation mindestens eine Adresse einer dezentralen Einrichtung (DZ) verwendet wird und falls die Kommunikationsverbindung Kommunikationsendgeräte (KE) betrifft, welche an die gleiche dezentrale Einrichtung (DZ) angeschlossen sind, eine Verbindung aufgebaut wird, ohne daß eine transportnetzspezifische Umsetzung der Kommunikationsdaten erfolgt.

11. Anordnung zum Auf- und/oder Abbau, bzw. Unterhalt einer Kommunikationsverbindung,
- die ein Transportnetz (71030, 72030, 72040, 73020) zur Bereitstellung einer Kommunikationsverbindung aufweist,
- bei der das Transportnetz mindestens zwei dezentrale Einrichtungen (DZ10, DZ20..., DZ40) zur Abgabe und Aufnahme von Kommunikationsdaten aufweist,
**dadurch gekennzeichnet, dass**
- die dezentralen Einrichtungen (DZ10-DZ40) jeweils eine dezentrale Vermittlungseinrichtung (CS1, CS2, CS10-CS40) zur Bereitstellung einer Kommunikationsverbindung im Transportnetz aufweisen, wobei die dezentralen Vermittlungseinrichtungen (CS1, CS2, CS10-CS40) derart eingerichtet sind, dass ein transportnetzabhängiges Callprozessing durchgeführt wird, und
- der Auf- und/oder Abbau der Kommunikationsverbindung über ein Steuerungsnetz (310, 410, STN) zu den dezentralen Vermittlungseinrichtungen (CS1, CS2, CS10-CS40) durch eine zentrale Steuerungseinrichtung (ZE2, ZE100) gesteuert ist, die mindestens zwei Steuerinformationen abgibt,
- wobei eine zur Definition einer Zeitschlitzverbindung über ein Koppelfeld geeignete Verbindungsinformation eine erste Steuerungsinformation darstellt und
- eine Protokollinformation eine zweite Steuerungsinformation derart darstellt, dass für die zentrale Steuerungseinrichtung (ZE2, ZE100) und/oder für die dezentralen Einrichtungen (DZ10-DZ40) zur Auswahl zu verwendender Kommunikationsprotokolle und nutzbarer Transportmedien bereitgestellt sind/ist.

12. Anordnung nach Anspruch 11,
bei der auf den dezentralen Vermittlungseinrichtungen (CS1, CS2, CS10-CS40) das transportnetzabhängige Callprozessing im wesentlichen auf Basic Call Funktionalität beschränkt ist.

13. Anordnung nach Anspruch 11 oder 12,
bei der die dezentrale Einrichtung (DZ10, DZ30) mindestens eine Umsetzeinrichtung (U1030, U30) in Form eines Gateways zur Umsetzung eines TDM-Protokolles in ein IP-Protokoll aufweist.

14. Anordnung nach einem der Ansprüche 11 bis 13,
bei der die dezentrale Einrichtung (DZ10-DZ40) mindestens eine Netzanschlußeinrichtung an ein Ethernet in Form eines Transceivers aufweist.

15. Anordnung nach einem der Ansprüche 11 bis 14,
bei der die dezentrale Einrichtung (DZ10-DZ40) mindestens erste Mittel zur Adressauswertung von Adressen dezentraler Einrichtungen (DZ10-DZ40) aufweist, die für den Fall, daß eine Kommunikationsverbindung (2050, 2060, 2070) lediglich eine einzige dezentrale Einrichtung (DZ10-DZ40) betrifft, ein erstes Signal abgeben.

16. Anordnung nach Anspruch 15,
bei der das erste Signal an eine Einrichtung zum Zugriff auf Zeitschlitze des TDM-Datenstroms (302) der dezentralen Einrichtung (DZ20) abgegeben wird und diese als Reaktion auf den Empfang des Signal die Verbindung im TDM-Datenstrom (302) kurzschließt.

17. Anordnung nach Anspruch 16,
bei der der Verbindungskurzschluß mittels einer Vertauschung einer Schreib- und Leserichtung erfolgt.

18. Anordnung nach einem der Ansprüche 11 bis 17,
bei der die dezentrale Einrichtung (DZ10-DZ40) als integriertes Kommunikationsendgerät (KE10..., KE40), Telefon (KE30) oder Personalcomputer (KE10, KE20, KE40) ausgebildet ist.

## Claims

1. Method for setting up and/or breaking down and maintaining a communication connection, in which
- a communication connection is provided between at least two decentralised devices (DZ10-DZ40), **characterised in that**
- the communication connection is provided in a transport network (71030, 72030, 72040, 73020) by decentralised switching units (CS1, CS2, CS10-CS40) assigned to the decentralised devices (DZ10-DZ40), wherein transport network-dependent call processing is carried out on the decentralised switching units (CS1, CS2, CS10-CS40),
- the setup and/or breakdown of the communication connection is controlled by a central control unit (ZE2, ZE100) via a control network (310, 410, STN) to the decentralised switching units (CS1, CS2, CS10-CS40),
- at least two control information items are used to control the setup and/or breakdown of the connection in the transport network,
- a connection information item suitable for defining a time slot connection via a matrix switch represents a first control information item,
- a protocol information item represents a second control information item and is provided for the central control unit (ZE2, ZE100) and/or for the decentralised devices (DZ10-DZ40) for selecting communication protocols to be used and usable transport media.

2. Method according to claim 1, in which the transport network-dependent call processing on the decentralised switching units (CS1, CS2, CS10-CS40) is substantially limited to basic call functionality.

3. Method according to one of the preceding claims, in which the control information item is supplemented by a media information item which relates to the transport network and identifies at least one transport network medium of the communication connection.

4. Method according to one of the preceding claims, for a communication connection composed of at least two partial connections (73020, 72030) in the transport network, wherein on each partial connection, use is made of at least one respective communication protocol, the layer structure of which differs in at least one layer and in which the control information item is supplemented by an information item which identifies a conversion apparatus (U20, U2030, U30, 3020) for the different communication protocols.

5. Method according to one of the preceding claims, for a communication connection composed of at least two partial connections in the transport network, wherein on each partial connection use is made of at least one respective communication protocol, the layer structure of which differs in at least one layer, in which the control information item is supplemented by an information item which identifies a media access device (CS10, CS30) for a respective communication medium.

6. Method according to one of the preceding claims, in which an information item for supplementing the control information item is kept ready in a centralised manner in the region of the central control unit (ZE2, ZE100).

7. Method according to one of claims 1 to 5, in which an information item for supplementing the control information item is kept ready in a decentralised manner and is determined at least once by the central control unit (ZE2, ZE100) in the course of handling a communication connection (71030, 72030, 73020, 72040).

8. Method according to one of the preceding claims, in which transmission on the partial connections between decentralised devices (DZ10, ..., DZ40) of the transport network takes place according to the Internet Protocol, and in which connection control takes place by assigning to an IP address precisely one subscriber connection (KE) of a PCM data stream and one decentralised device (DZ).

9. Method according to one of the preceding claims, in which, based on control information items, a check is carried out in order to ascertain whether it is necessary to set up a connection via the transport network (72040) and, if not, the connection is provided in some other way.

10. Method according to claim 9, in which at least one address of a decentralised device (DZ) is used as the control information item and, if the communication connection concerns communication terminals (KE) which are connected to the same decentralised device (DZ), a connection is set up without any transport network-specific conversion of the communication data taking place.

11. Arrangement for setting up and/or breaking down and maintaining a communication connection,
- which comprises a transport network (71030, 72030, 72040, 73020) for providing a communication connection,
- in which the transport network comprises at least two decentralised devices (DZ10, DZ20, ..., DZ40) for outputting and receiving communication data,
**characterised in that**
- the decentralised devices (DZ10-DZ40) each have a decentralised switching unit (CS1, CS2, CS10-CS40) for providing a communication connection in the transport network, wherein the decentralised switching units (CS1, CS2, CS10-CS40) are configured in such a way that a transport network-dependent call processing is carried out, and
- the setup and/or breakdown of the communication connection is controlled via a control network (310, 410, STN) to the decentralised switching units (CS1, CS2, CS10-CS40) by a central control unit (ZE2, ZE100) which outputs at least two control information items,
- wherein a connection information item suitable for defining a time slot connection via a matrix switch represents a first control information item, and
- a protocol information item represents a second control information item which is provided for the central control unit (ZE2, ZE100) and/or for the decentralised devices (DZ10-DZ40) for selecting communication protocols to be used and usable transport media.

12. Arrangement according to claim 11, in which the transport network-dependent call processing on the decentralised switching units (CS1, CS2, CS10-CS40) is substantially limited to basic call functionality.

13. Arrangement according to claim 11 or 12, in which the decentralised device (DZ10, DZ30) has at least one conversion unit (U1030, U30) in the form of a gateway for converting a TDM protocol into an IP protocol.

14. Arrangement according to one of claims 11 to 13, in which the decentralised device (DZ10-DZ40) has at least one network connection device to an Ethernet, in the form of a transceiver.

15. Arrangement according to one of claims 11 to 14, in which the decentralised device (DZ10-DZ40) has at least first means for the address evaluation of addresses of decentralised devices (DZ10-DZ40), which means output a first signal in the case where a communication connection (2050, 2060, 2070) concerns only a single decentralised device (DZ10-DZ40).

16. Arrangement according to claim 15, in which the first signal is output to a device for accessing time slots of the TDM data stream (302) of the decentralised device (DZ20), and said device short-circuits the connection in the TDM data stream (302) in reaction to receipt of the signal.

17. Arrangement according to claim 16, in which the short-circuiting of the connection takes place by means of a swapping of a write and read direction.

18. Arrangement according to one of claims 11 to 17, in which the decentralised device (DZ10-DZ40) is designed as an integrated communication terminal (KE10, ..., KE40), telephone (KE30) or personal computer (KE10, KE20, KE40).

## Revendications

1. Procédé pour établir et/ou interrompre respectivement maintenir une liaison de communication, dans lequel
- une liaison de communication est mise à disposition entre au moins deux dispositifs décentralisés (DZ10 - DZ40), **caractérisé en ce que**
- la liaison de communication est mise à disposition par des dispositifs de commutation décentralisés (CS1, CS2, CS10 - CS40) associés aux dispositifs décentralisés (DZ10
- DZ40) dans un réseau de transport (71030, 72030, 72040, 73020), une procédure d'appel dépendante du réseau de transport étant effectuée sur les dispositifs de commutation décentralisés (CS1, CS2, CS10 - CS40),
- l'établissement et/ou l'interruption de la liaison de communication vers les dispositifs de commutation décentralisés (CS1, CS2, CS10 - CS40) est commandé par un dispositif de commande central (ZE2, ZE100) par le biais d'un réseau de commande (310, 410, STN),
- au moins deux informations de commande sont employées pour la commande de l'établissement et/ou l'interruption de la liaison dans le réseau de transport,
- une information de liaison appropriée pour définir une liaison de fenêtre de temps par le biais d'un champ de couplage représente une première information de commande,
- une information de protocole représente une deuxième information de commande et est mise à disposition pour le dispositif de commande central (ZE2, ZE100) et/ou pour les dispositifs décentralisés (DZ10 - DZ40) en vue de sélectionner les protocoles de communication à utiliser et les supports de transport utilisables.

2. Procédé selon la revendication 1,
dans lequel, sur les dispositifs de commutation décentralisés (CS1, CS2 CS10 - CS40), la procédure d'appel dépendante du réseau de transport est limitée pour l'essentiel à la fonctionnalité Appel de base.

3. Procédé selon l'une quelconque des revendications précédentes,
dans lequel l'information de commande est complétée par une information de support concernant le réseau de transport qui identifie au moins un support du réseau de transport pour la liaison de communication.

4. Procédé selon l'une quelconque des revendications précédentes,
pour une liaison de communication composée d'au moins deux liaisons partielles (73020, 72030) dans le réseau de transport, au moins un protocole de communication, dont la structure des couches est différente dans au moins une couche, étant appliqué sur chaque liaison partielle et avec lequel l'information de commande est complétée par une information qui identifie un système de conversion (U20, U2030, U30, 3020) pour les différents protocoles de communication.

5. Procédé selon l'une quelconque des revendications précédentes, pour une liaison de communication composée au moins de deux liaisons partielles dans le réseau de transport, au moins un protocole de communication, dont la structure des couches est différente dans au moins une couche, étant appliqué sur chaque liaison partielle, avec lequel l'information de commande est complétée par une information qui identifie un dispositif d'accès au support (CS10, CS30) pour un support de communication respectif.

6. Procédé selon l'une quelconque des revendications précédentes, dans lequel une information destinée à compléter l'information de commande est conservée de manière centrale dans le domaine du dispositif de commande central (ZE2, ZE100).

7. Procédé selon l'un des revendications 1 à 5,
dans lequel une information destinée à compléter l'information de commande est conservée de manière décentralisée et est déterminée au moins une fois par le dispositif de commande central (ZE2, ZE100) au cours du traitement d'une liaison de communication (71030, 72030, 73020, 72040).

8. Procédé selon l'une quelconque des revendications précédentes, dans lequel les transmissions sur les liaisons partielles entre des dispositifs décentralisés (DZ10, .. , DZ40) du réseau de transport ont lieu selon le protocole Internet et dans lequel exactement un raccordement d'abonné (KE) d'un flux de données PCM et un dispositif décentralisé (DZ) sont attribués pour la commande de liaison d'une adresse IP.

9. Procédé selon l'une quelconque des revendications précédentes, dans lequel il est vérifié à l'aide des informations de commande si un établissement de liaison par le biais du réseau de transport (72040) est nécessaire, et dans le cas contraire, la liaison est mise à disposition d'une autre façon.

10. Procédé selon la revendication 9,
dans lequel au moins une adresse d'un dispositif décentralisé (DZ) sert d'information de commande et, si la liaison de communication concerne des terminaux de communication (KE) qui sont raccordés au même dispositif décentralisé (DZ), une liaison est établie sans que les données de communication ne soient converties spécifiquement pour le réseau de transport.

11. Agencement pour établir et/ou interrompre, respectivement maintenir une liaison de communication,
- qui comporte un réseau de transport (71030, 72030, 72040, 73020) servant à mettre à disposition une liaison de communication,
- dans lequel le réseau de transport comporte au moins deux dispositifs décentralisés (DZ10, DZ20, ..., DZ40) permettant de délivrer et recevoir des données de communication,
**caractérisé en ce que**
- les dispositifs décentralisés (DZ1 - DZ40) comportent chacun un dispositif de commutation décentralisé (CS1, CS2, CS10 - CS40) servant à mettre à disposition une liaison de communication dans le réseau de transport, les dispositifs de commutation décentralisés (CS1, CS2, CS10
- CS40) étant agencés de manière à effectuer une procédure d'appel indépendante du réseau de transport, et
- l'établissement et/ou l'interruption de la liaison de communication vers les dispositifs de commutation décentralisés (CS1, CS2, CS10 - CS40) sont commandés par un dispositif de commande central (ZE2, ZE100) par le biais d'un réseau de commande (310, 410, STN), ledit dispositif de commande central délivrant au moins deux informations de commande,
- une information de liaison appropriée pour définir une liaison de fenêtre de temps par le biais d'un champ de couplage représentant une première information de commande et
- une information de protocole représentant une deuxième information de commande de manière telle que le dispositif de commande central (ZE2, ZE100) et/ou les dispositifs décentralisés (DZ10 - DZ40) soient mis à disposition pour sélectionner les protocoles de communication à utiliser et les supports de transport utilisables.

12. Agencement selon la revendication 11,
dans lequel, sur les dispositifs de commutation décentralisés (CS1, CS2, CS10 - CS40), la procédure d'appel dépendante du réseau de transport est limitée pour l'essentiel à la fonctionnalité d'appel de base.

13. Agencement selon la revendication 11 ou 12,
dans lequel le dispositif décentralisé (DZ10, DZ30) comporte au moins un dispositif de conversion (U1030, U30), sous forme d'une passerelle, destiné à convertir un protocole TDM en un protocole IP.

14. Agencement selon une des revendications 11 à 13,
dans lequel le dispositif décentralisé (DZ10 - DZ40) comporte au moins un dispositif de raccordement de réseau à un réseau Ethernet sous forme d'un émetteur-récepteur.

15. Agencement selon une des revendications 11 à 14,
dans lequel le dispositif décentralisé (DZ10 - DZ40) comporte au moins des premiers moyens pour évaluer des adresses des dispositifs décentralisés (DZ10 - DZ40), lesquels délivrent un premier signal pour le cas qu'une liaison de communication (2050, 2060, 2070) concerne uniquement un seul dispositif décentralisé (DZ10 - DZ40).

16. Agencement selon la revendication 15,
dans lequel le premier signal est délivré à un dispositif afin d'accéder à des fenêtres de temps du flux de données TDM (302) du dispositif décentralisé (DZ20) et celui-ci court-cuite la liaison dans le flux de données TDM (302) en réaction à la réception du signal.

17. Agencement selon la revendication 16,
dans lequel le court-circuit de liaison est effectué au moyen d'un échange d'un sens d'écriture et de lecture.

18. Agencement selon une des revendications 11 à 17,
dans lequel le dispositif décentralisé (DZ10 - DZ40) est formé en tant que terminal de communication intégré (KE10, ..., KE40), téléphone (KE30) ou ordinateur individuel (KE10, KE20, KE40).
